# FASCICULE DE BREVET EUROPEEN

(11) **EP 1 251 023 B1**
(45) Date de publication et mention de la délivrance du brevet: **17.11.2004**
(21) Numéro de dépôt: 02290954.3
(22) Date de dépôt: 16.04.2002
(51) Int. Cl.: B60K 7/00, H02K 1/14, H02K 21/22, H02K 7/10, H02K 7/14, H02K 1/27

(54) **Machine électrique à rotor extérieur**
Elektrische Maschine mit äusserem Läufer
Electrical machine with external rotor

(30) Priorité: 17.04.2001 EP 01400981; 05.07.2001 FR 0108933
(43) Date de publication de la demande: 23.10.2002
(73) Titulaire: MOTEURS LEROY-SOMER, 16000 Angouleme (FR)
(72) Inventeur: Gauthier, Pascal, 16290 Asniere-sur-Nouere (FR); Saint-Michel, Jacques, 16000 Angouleme (FR); Gilles, Christophe, 16000 Angouleme (FR)
(74) Mandataire: Tanty, François

(56) Documents cités:
- EP-A- 0 669 699
- DE-A- 19 503 610
- DE-C- 19 903 409
- PATENT ABSTRACTS OF JAPAN vol. 010, no. 091 (E-394), 9 avril 1986 (1986-04-09) & JP 60 234451 A (SHINKO DENKI KK), 21 novembre 1985 (1985-11-21)
- PATENT ABSTRACTS OF JAPAN vol. 2000, no. 14, 5 mars 2001 (2001-03-05) -& JP 2000 333407 A (TADA SEIICHI;AKATANI MASAMI), 30 novembre 2000 (2000-11-30)

## Description

La présente invention concerne les machines électriques telles que définies dans le préambule de la revendication 1.

L'invention a pour objet un nouveau moteur électrique convenant tout particulièrement à l'entraînement en prise directe, sans démultiplication, d'un ou plusieurs câble(s) ou d'un pneumatique.

On connaît notamment par la demande de brevet EP-A-669 699 une machine électrique tournante comportant un rotor extérieur qui comporte des aimants permanents alternés avec des pôles, entourés d'un blindage comportant une couche non magnétique. Les pôles comportent des perçages.

On connaît également par la demande de brevet DE-A1-19503610 une machine électrique multi phase et multi pôle dont le rotor comporte des pôles alternés avec des aimants permanents et dont le stator comporte des bobinages rangés les uns sur les autres en couches autour de chaque pôle.

On connaît par la demande de brevet JP 60234451 un rotor extérieur servant de base pour la présentation en deux parties de la revendication 1 et comportant des aimants permanents disposés en alternance avec des pièces polaires.

Le brevet DE-C1-19903409 divulgue un moteur synchrone à rotor extérieur, comportant des aimants collés en surface.

Enfin, il est connu par la demande de brevet JP 2000-333407 une machine à rotor extérieur dépourvu de pièces polaires.

Le nouveau moteur selon l'invention est décrit dans la revendication 1.

L'enveloppe amagnétique est avantageusement d'un seul tenant et constituée d'une seule couche d'un seul matériau.

Toujours dans une réalisation particulière, chaque aimant présente, dans un plan de coupe perpendiculaire à l'axe du rotor, deux faces non parallèles, convergeant en direction du stator.

La surface intérieure du rotor est avantageusement cylindrique de révolution.

L'invention permet notamment de fabriquer une machine d'entraînement dépourvue d'engrenages, par exemple un treuil de levage pour une grue, suffisamment silencieuse pour permettre la rotation du moteur à une vitesse élevée, en l'absence de charge sans contrevenir aux normes en matière de nuisances sonores. Dans le cas d'un treuil de levage, la productivité de la grue s'en trouve améliorée.

L'absence d'engrenages permet encore de réduire considérablement le coût de fabrication de la machine.

Les pièces polaires sont avantageusement feuilletées.

Le moteur selon l'invention facilite le défluxage, grâce au fait que le champ magnétique généré par les bobines du stator peut pénétrer aisément dans les pièces polaires compte tenu de la disposition des aimants ; dans les rotors extérieurs connus, à aimants rapportés en surface, le champ magnétique généré par le stator rencontre les aimants, lesquels sont vus comme des entrefers et entravent le défluxage.

Le nombre de pôles peut être relativement élevé, notamment être égal à 32 ou 48, par exemple.

L'invention a encore pour objet un treuil de levage comportant une machine tel que défini plus haut.

L'invention a encore pour objet une roue motrice comportant une machine tel que défini plus haut.

L'invention a encore pour objet une machinerie d'ascenseur comportant une machine tel que défini plus haut.

L'invention sera mieux comprise à la lecture de la description détaillée qui va suivre, d'un exemple de réalisation non limitatif, et à l'examen du dessin annexé, sur lequel :
- la figure 1 est une vue schématique en perspective du rotor et du stator, représentés chacun isolément, et
- la figure 2 est une coupe transversale schématique du moteur, dans un plan perpendiculaire à l'axe du stator.

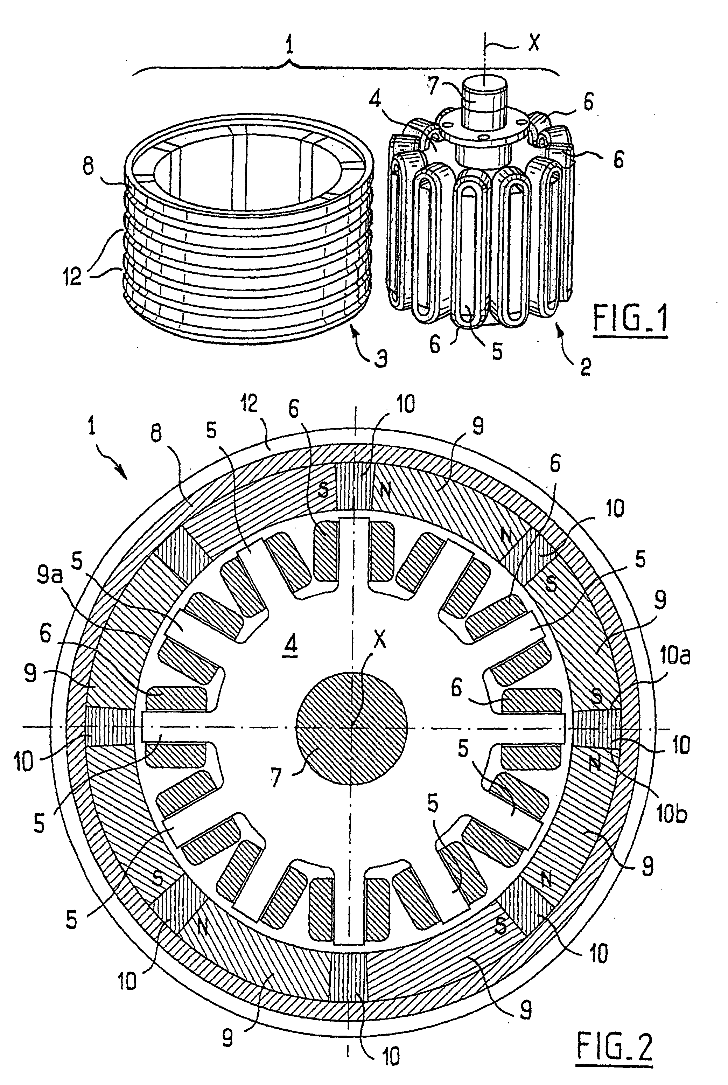

Le moteur 1 représenté sur les figures 1 et 2 comporte un stator intérieur 2 et un rotor extérieur 3, destiné à tourner selon l'axe X autour du stator 2.

Le stator 2 peut être de tout type connu en soi mais de préférence le stator 2 présente un circuit magnétique 4 comportant une pluralité de dents 5, sur chacune desquelles est disposée une bobine individuelle 6.

Les différentes bobines 6 sont reliées électriquement entre elles de manière à générer un champ magnétique tournant, permettant l'entraînement du rotor 3.

Les bobines 6 peuvent être maintenues sur les dents 5 du stator 2 au moyen de cales non représentées, de telles cales étant par exemple engagées sur des encoches prévues aux extrémités des dents 5.

Le stator 2 est solidaire d'un arbre 7 permettant sa fixation sur un bâti et supportant les roulements du rotor 3, non représentés dans un souci de clarté du dessin. Le diamètre de l'arbre 7 peut être relativement élevé, étant par exemple supérieur à 100 mm.

Le rotor 3 comporte une enveloppe amagnétique 8, par exemple en aluminium ou en acier amagnétique, à l'intérieur de laquelle sont disposés une pluralité de pièces polaires 9 et une pluralité d'aimants permanents 10, au nombre de huit dans l'exemple considéré. Les pièces polaires 9, tout comme le circuit magnétique 4 du stator 2, sont feuilletées, c'est-à-dire formées par l'empilage de tôles magnétiques revêtues chacune d'une couche de vernis, de manière à réduire les pertes par courants induits.

Les aimants 10 sont positionnés entre les pièces polaires 9 de telle sorte que deux aimants adjacents 10 aient des polarités de même nature tournées vers la pièce polaire 9 s'étendant entre eux. Ainsi, les pièces polaires 9 concentrent le flux magnétique des aimants 10. Selon la longueur de la machine, chaque aimant 10 peut être formé par l'assemblage de plusieurs barreaux aimantés mis bout à bout.

Dans l'exemple de réalisation représenté, chaque aimant 10 comporte deux faces opposées 10a, 10b, de polarités opposées, et convergeant vers le stator.

Cette disposition permet d'assurer le maintien des aimants 10 et des pièces polaires 9 à l'intérieur de l'enveloppe amagnétique 8, sans qu'il soit nécessaire de recourir à des moyens de fixation tels que des barreaux engagés dans des perçages des pièces polaires 9. La structure du rotor s'en trouve simplifiée. L'ensemble constitué par les pièces polaires 9 et les aimants 10 peut être inséré à force dans l'enveloppe amagnétique 8. Les aimants 10 empêchent, par effet de coin, les pièces polaires 9 de se déplacer vers l'intérieur. La dimension radiale des pièces polaires 9 est sensiblement égale à celle des aimants 10 et les pièces polaires 9 sont au contact de sensiblement toute la surface des faces correspondantes 10a et 10b des aimants 10.

Dans l'exemple illustré, la surface radialement intérieure 9a des pièces polaires 9 est cylindrique de révolution autour de l'axe X du stator 2, mais on ne sort pas du cadre de la présente invention lorsque cette surface 9a présente une forme autre que cylindrique de révolution, par exemple une forme bombée vers l'axe X, afin de réduire les ondulations de couple.

L'enveloppe amagnétique 8 peut servir de jante à un pneumatique, notamment lorsque le moteur entre dans la fabrication d'une roue motrice.

L'enveloppe amagnétique 8 peut également, comme c'est le cas dans l'exemple représenté, servir à entraîner une pluralité de câbles d'une machinerie d'ascenseur et comporter à cet effet des gorges annulaires 12.

L'enveloppe amagnétique 8 peut s'étendre sur une distance supérieure à la dimension axiale des pièces polaires 9 et des aimants 10, afin de comporter une partie déportée par rapport aux pièces polaires 9 et aux aimants 10, les gorges annulaires précitées pouvant n'être présentes que sur cette partie déportée.

L'enveloppe amagnétique 8 peut encore être rendue solidaire d'une poulie servant à l'entraînement d'un ou plusieurs câbles.

Dans l'exemple décrit, le moteur est destiné à être alimenté en courant triphasé, comporte huit pôles et le stator 2 comporte douze dents 5. On ne sort pas du cadre de la présente invention lorsque le nombre de pôles est différent, étant par exemple égal à 32 ou 48.

Les dents 5 peuvent présenter une largeur constante ou non et les bobines un profil complémentaire, le cas échéant, afin de se coincer sur les dents.

L'invention n'est pas limitée à un moteur et s'applique avantageusement aux générateurs, notamment ceux dont le rotor tourne à une vitesse élevée.

L'invention permet alors, notamment grâce aux pièces polaires feuilletées, de limiter les pertes dans les aimants.

## Revendications

1. Machine électrique tournante (1) synchrone, comportant un stator intérieur (2) et un rotor extérieur (3), le rotor (3) comportant une pluralité d'aimants permanents (10) disposés entre des pièces polaires (9) ne comportant pas de perçages pour l'engagement de barreaux de maintien, à l'intérieur d'une enveloppe amagnétique (8), les aimants (10) étant positionnés entre les pièces polaires (9) de telle sorte que deux aimants adjacents aient des polarités de même nature tournée vers la pièce polaire s'étendant entre eux, le stator (2) comportant un circuit magnétique comportant une pluralité de dents (5), **caractérisée par le fait que** ces dents sont dépourvues d'épanouissements polaires et servent chacune de noyau à une bobine individuelle (6).

2. Machine selon la revendication 1, **caractérisée par le fait que** chaque aimant (10) présente, dans un plan de coupe perpendiculaire à l'axe du rotor, deux faces (10a, 10b) non parallèles, convergeant en direction du stator.

3. Machine selon l'une quelconque des revendications précédentes, **caractérisée par le fait qu'**elle est dépourvue d'engrenages.

4. Machine selon l'une quelconque des revendications précédentes, **caractérisée par le fait que** les pièces polaires (9) sont feuilletées.

5. Machine selon l'une quelconque des revendications précédentes, **caractérisée par le fait que** la surface intérieur du rotor (3) est cylindrique de révolution.

6. Machine selon l'une quelconque des revendications précédentes, **caractérisée en ce qu'**elle constitue un moteur.

7. Machine selon l'une quelconque des revendications 1 à 5, **caractérisée par le fait qu'**elle constitue un générateur.

8. Treuil de levage, **caractérisé par le fait qu'**il comporte une machine tel que défini à la revendication 6.

9. Roue motrice, **caractérisée par le fait qu'**elle comporte une machine tel que défini à la revendication 6.

10. Machinerie d'ascenseur, **caractérisée en ce qu'**elle comporte une machine tel que défini à la revendication 6.

11. Machine selon l'une quelconque des revendications 1 à 6, **caractérisée par le fait que** les bobines (6) sont maintenues sur les dents (5) du stator (2) au moyen de cales engagées sur des encoches prévues aux extrémités des dents (5).

12. Machine selon l'une quelconque des revendications 1 à 6 et 11, **caractérisée par le fait que** l'enveloppe amagnétique (8) sert de jante à un pneumatique.

13. Machine selon l'une quelconque des revendications 1 à 6 et 11, **caractérisée par le fait que** l'enveloppe amagnétique (8) comporte des gorges annulaires (12).

14. Machine selon l'une quelconque des revendications 1 à 6 et 11, **caractérisée par le fait que** l'enveloppe amagnétique (8) est solidaire d'une poulie.

## Patentansprüche

1. Synchronmaschine (1) mit Innenständer (2) und Außenläufer (3), wobei der Läufer (3) mehrere zwischen Polstücken (9) angeordnete Dauermagnete (10) aufweist, wobei die Polstücke keine Bohrungen zur Aufnahme von Haltestäben aufweisen, wobei die Dauermagnete (10) innerhalb eines Mantels zwischen den Polstücken (9) derart angeordnet sind, daß zwei benachbarte Magnete dem dazwischenliegenden Polstück mit gleichnamigen Polen zugewandt sind, und wobei der Ständer (2) einen Magnetkreis mit mehreren Zähnen (5) aufweist, **dadurch gekennzeichnet, daß** die Zähne keine Polerweiterungen haben und jeweils den Kern einer einzelnen Spule (9) bilden, und daß der Mantel (8) unmagnetisch ist.

2. Maschine nach Anspruch 1, **dadurch gekennzeichnet, daß** jeder Magnet (10) in einer zur Läuferachse senkrechten Schnittebene (2) nicht parallele, in Richtung des Ständers konvergierende Flächen (10a, 10b) aufweist.

3. Maschine nach einem der vorhergehenden Ansprüche, **dadurch gekennzeichnet, daß** sie getriebelos ist.

4. Maschine nach einem der vorhergehenden Ansprüche, **dadurch gekennzeichnet, daß** die Polstücke (9) geblecht sind.

5. Maschine nach einem der vorhergehenden Ansprüche, **dadurch gekennzeichnet, daß** die Innenfläche des Läufers (3) rotationszylindrisch ist.

6. Maschine nach einem der vorhergehenden Ansprüche, **dadurch gekennzeichnet, daß** sie einen Motor bildet.

7. Maschine nach einem der Ansprüche 1 bis 5, **dadurch gekennzeichnet, daß** sie einen Generator bildet.

8. Hubwerk, **dadurch gekennzeichnet, daß** es eine Maschine nach Anspruch 6 aufweist.

9. Antriebsrad, **dadurch gekennzeichnet, daß** es eine Maschine nach Anspruch 6 aufweist.

10. Aufzugsmaschinerie, **dadurch gekennzeichnet, daß** sie eine Maschine nach Anspruch 6 aufweist.

11. Maschine nach einem der Ansprüche 1 bis 6, **dadurch gekennzeichnet, daß** die Spulen (6) auf den Zähnen (5) des Ständers (2) mittels Keilen gehalten sind, die in an den Enden der Zähne (5) vorgesehene Aussparungen eingreifen.

12. Maschine nach einem der Ansprüche 1 bis 6 und 11, **dadurch gekennzeichnet, daß** der unmagnetische Mantel (8) die Felge eines Luftreifens bildet.

13. Maschine nach einem der Ansprüche 1 bis 6 und 11, **dadurch gekennzeichnet, daß** der unmagnetische Mantel (8) ringförmige Rillen (12) aufweist.

14. Maschine nach einem der Ansprüche 1 bis 6 und 11, **dadurch gekennzeichnet, daß** der unmagnetische Mantel (8) an einer Seilrolle befestigt ist.

## Claims

1. A synchronous rotary electric machine (1) having an inner stator (2) and an outer rotor (3), the rotor (3) comprising a plurality of permanent magnets (10) disposed between pole pieces (9) not having holes for engaging fixing bars, inside a casing (8), the magnets (10) being disposed between the pole pieces (9) so that two adjacent magnets have polarities of the same type turned towards the pole piece extending there between, the stator (2) comprising a magnetic circuit comprising a plurality of teeth (5) **characterized by** the fact that said teeth are without pole pieces and each serve as the core of an individual coil (6), and by the fact that the casing (8) is non-magnetic.

2. A machine according to claim 1, **characterized by** the fact that in a section plane that is perpendicular to the axis of the rotor, each magnet (10) presents two non-parallel faces (10a, 10b) converging towards the stator.

3. A machine according to any preceding claim, **characterized by** the fact that it does not have any gearing.

4. A machine according to any preceding claim, **characterized by** the fact that the pole pieces (9) are laminated.

5. A machine according to any preceding claims, wherein said rotor (3) comprises an inner surface which is circularly cylindrical.

6. A machine according to any preceding claim, **characterized in that** it constitutes a motor.

7. A machine according to any one of claims 1 to 5, **characterized by** the fact that it constitutes a generator.

8. A hoist, **characterized by** the fact that it includes a machine as defined in claim 6.

9. A driving wheel, **characterized by** the fact that it includes a machine as defined in claim 6.

10. Lift or elevator machinery, **characterized in that** it includes a machine as defined in claim 6.

11. A machine according to any one of claims 1 to 6, wherein said coils (6) are held on said stator (2) teeth (5) by shims being engaged in notches provided at the ends of said teeth (5).

12. A machine according to any one of claims 1 to 6 and 11, wherein said non-magnetic casing (8) serves as a wheel rim for a pneumatic tire.

13. A machine according to any one of claims 1 to 6 and 11, wherein said non-magnetic casing (8) includes annular grooves (12).

14. A machine according to any one of claims 1 to 6 and 11, wherein said non-magnetic casing (8) is secured to a pulley.
